(19) Europäisches Patentamt
European Patent Office
Office européen des brevets

(11) **EP 4 268 579 A1**

(12) # EUROPEAN PATENT APPLICATION
published in accordance with Art. 153(4) EPC

(43) Date of publication:
**01.11.2023 Bulletin 2023/44**

(21) Application number: **21910926.1**

(22) Date of filing: **22.12.2021**

(51) International Patent Classification (IPC):
**A01G 31/00** $^{(2018.01)}$

(52) Cooperative Patent Classification (CPC):
**A01G 31/00; Y02P 60/21**

(86) International application number:
**PCT/JP2021/047746**

(87) International publication number:
**WO 2022/138786 (30.06.2022 Gazette 2022/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.12.2020 JP 2020216404**

(71) Applicant: **Kuraray Co., Ltd.**
**Kurashiki-shi, Okayama 710-0801 (JP)**

(72) Inventors:
• **KAHARU Taeko**
**Tokyo 100-0004 (JP)**
• **IMAOKA Yoriko**
**Kurashiki-shi, Okayama 713-8550 (JP)**
• **TAJIMA Yasuhiro**
**Kurashiki-shi, Okayama 713-8550 (JP)**

(74) Representative: **Müller-Boré & Partner**
**Patentanwälte PartG mbB**
**Friedenheimer Brücke 21**
**80639 München (DE)**

(54) **CULTURE SOLUTION, CULTURE SOLUTION ADDITIVE, AND CULTIVATION METHOD**

(57)     Provided are: a culture fluid for hydroponics accompanied by a large amount of water absorption by plants; an additive for a culture fluid, the additive enabling such a culture fluid to be readily prepared; and a cultivation method in which the same is used. A culture fluid for hydroponics contains water-soluble polymeric molecules, and has a surface tension at 20 °C of 45 mN/m or more and 70 mN/m or less, and a kinematic viscosity at 30 °C of 0.8 mm$^2$/s or more and 2.00 mm$^2$/s or less.

EP 4 268 579 A1

**Description**

[TECHNICAL FIELD]

The present invention relates to a culture fluid, an additive for a culture fluid, and a cultivation method.

[BACKGROUND ART]

In recent years, cultivation of various types of plants such as leafy vegetables and fruit vegetables carried out by hydroponics (may be also referred to as "hydroponic culture, etc.") in which a culture fluid is used has been attempted. Hydroponics is advantageous in, for example, that diseases derived from soil are not a concern, and that nutrition stated of crops can be easily controlled.

As the culture fluid for hydroponics, water (an aqueous solution) containing fertilizer component(s) required for a plant is used, in general. For example, Patent Document 1 discloses a culture fluid for use in hydroponic culture, the culture fluid being characterized by a potassium concentration of 20 mg/L or more and 100 mg/L or less, and a calcium concentration of 150 mg/L or more and 380 mg/L or less. In addition, Patent Document 2 discloses a culture fluid for hydroponic culture to be used in cultivation of leafy vegetables, the culture fluid being characterized by containing zinc at a concentration of 2 ppm to 10 ppm.

[PRIOR ART DOCUMENTS]

[Patent Documents]

Patent Document 1: Japanese Unexamined Patent Application, Publication No. 2015-149968
Patent Document 2: Japanese Unexamined Patent Application, Publication No. 2017-63632

[SUMMARY OF THE INVENTION]

[Problems to be Solved by the Invention]

With respect to the culture fluid for hydroponics, it is desired that fertilizer component(s), etc., in the culture fluid into can be sufficiently absorbed into plants. To this end, use of a culture fluid accompanied by a large amount of water absorption by plants, i.e., a culture fluid which can be easily absorbed by plants may be envisaged. However, the conventional culture fluids disclosed in the Patent Documents 1, 2, and the like are proposed without taking into consideration the amount of water absorption by plants.

The present invention was made in view of the foregoing circumstances, and an object of the present invention to provide: a culture fluid for hydroponics accompanied by a large amount of water absorption by plants; an additive for a culture fluid, the additive being able to be used for preparation of such a culture fluid; and a cultivation method in which either of one of these is used.

[Means for Solving the Problems]

The aforementioned objects can be accomplished by providing any of the following:

(1) A culture fluid for hydroponics containing water-soluble polymeric molecules, in which a surface tension at 20 °C of the culture fluid is 45 mN/m or more and 70 mN/m or less, and a kinematic viscosity at 30 °C of the culture fluid is 0.8 mm$^2$/s or more and 2.00 mm$^2$/s or less;

(2) The culture fluid according to (1), wherein a content of molecules having a molecular weight of 1,000 or less in the water-soluble polymeric molecules is 0.5% by mass or less;

(3) An additive for a culture fluid for hydroponics, the additive consisting of: water-soluble polymeric molecules having a content of molecules having a molecular weight of 1,000 or less being 0.5% by mass or less; and optionally, a fertilizer; and

(4) A cultivation method including a step of performing hydroponics by using: the culture fluid according to (1) or (2); or a culture fluid containing the additive for a culture fluid according to (3).

[Effects of the Invention]

The present invention enables providing: a culture fluid for hydroponics accompanied by a large amount of water absorption by plants; an additive for a culture fluid being able to be used for preparation of such a culture fluid; and a cultivation method in which one of these is used.

[DESCRIPTION OF EMBODIMENTS]

Culture Fluid

The culture fluid of the present invention contains water-soluble polymeric molecules, and has a surface tension at 20 °C of 45 mN/m or more and 70 mN/m or less and a kinematic viscosity at 30 °C of 0.8 $mm^2$/s or more and 2.00 $mm^2$/s or less. The culture fluid is a culture fluid for hydroponics. Due to the water-soluble polymeric molecules leading to a decrease in surface tension, the culture fluid is expected to have increased wettability on roots and the like of plants, thereby being accompanied by a large amount of water absorption by plants. Furthermore, in a case in which the water-soluble polymeric molecules are contained in excess, the amount of water absorption by plants may be decreased due to an increase in viscosity; however, the culture fluid is accompanied by a large amount of water absorption by plants by virtue of the kinematic viscosity being adjusted to fall within a specified range. Accordingly, the culture fluid is likely to be absorbed by the plants, and as a result thereof, the amount of the fertilizer and the like in the culture fluid absorbed by the plants increases.

Water-Soluble Polymeric Molecules

The water-soluble polymeric molecules as referred to herein mean macromolecules dissolvable in water, and mean, for example, macromolecules which can be an aqueous solution at a concentration of 0.1% by mass or more at 20 °C, and are preferably macromolecules which can be an aqueous solution at a concentration of 1% by mass or more at 20 °C.

Examples of the water-soluble polymeric molecules contained in the culture fluid of the present invention include polyvinyl alcohol (hereinafter, may be also referred to as "PVA"), polyethylene glycol (hereinafter, may be also referred to as "PEG"), polypropylene glycol, polyacrylamide, sodium polyacrylate, polyvinylpyrrolidone, polyvinyl ether, an isobutylene-maleic anhydride copolymer, polyallylamine, carboxymethylcellulose, hydroxyethylcellulose, hydroxypropylcellulose, methylcellulose, starch, sodium alginate, alginic acid propylene glycol ester, starch sodium glycolate, starch phosphoric acid ester sodium, modified products of the same, and the like.

Of these, in light of, for example, a possibility of enabling surface tension to be effectively decreased while inhibiting an increase in kinematic viscosity, PVA and PEG are preferred, and PVA is more preferred. As the water-soluble polymeric molecules, one type or two or more types thereof may be used.

The PVA is a polymer having a vinyl alcohol unit as a monomer unit. The PVA is obtained by, typically, subjecting a polyvinyl ester to saponification. The lower limit of a proportion of the vinyl alcohol unit with respect to total monomer units in the PVA is preferably 50 mol%, more preferably 60 mol%, and still more preferably 70 mol%. When proportion of the vinyl alcohol unit is equal to or more than the lower limit, favorable water solubility and the like may be attained. On the other hand, the upper limit of the proportion of the vinyl alcohol unit may be 100 mol%, preferably 99.99 mol%, and more preferably 99 mol%.

The lower limit of a degree of saponification of the PVA is preferably 35 mol%, more preferably 50 mol%, still more preferably 70 mol%, and particularly preferably 75 mol%. On the other hand, the upper limit of the degree of saponification may be 100 mol%, preferably 99 mol%, more preferably 95 mol%, and still more preferably 92 mol%, or may be particularly preferably less than 88 mol% in some cases. When the degree of saponification falls within the above range, surface tension can be effectively decreased. The degree of saponification is a value determined by a method described in JIS K6726: 1994.

The PVA may have other monomer unit(s) aside from the vinyl alcohol unit and a vinyl ester unit. Examples of a monomer that gives the other monomer unit include: $\alpha$-olefins such as ethylene, propylene, 1-butene, isobutene, and 1-hexene; acrylic acid, methacrylic acid; acrylic acid esters such as methyl acrylate and ethyl acrylate; methacrylic acid esters such as methyl methacrylate and ethyl methacrylate; acrylamide derivatives such as N-methylacrylamide and N-ethylacrylamide; methacrylamide derivatives such as N-methylmethacrylamide and N-ethylmethacrylamide; vinyl ethers such as methyl vinyl ether, ethyl vinyl ether, n-propyl vinyl ether, isopropyl vinyl ether, and n-butyl vinyl ether; hydroxy group-containing vinyl ethers such as ethylene glycol vinyl ether, 1,3-propane diol vinyl ether, and 1,4-butanediol vinyl ether; allyl acetate; allyl ethers such as propyl allyl ether, butyl allyl ether, and hexyl allyl ether; monomers having an oxyalkylene group; isopropenyl acetate; hydroxy group-containing $\alpha$-olefins such as 3-buten-1-ol, 4-penten-1-ol, 5-hexen-1-ol, 7-octen-1-ol, 9-decen-1-ol, and 3-methyl-3-buten-1-ol; monomers having a silyl group such as vinyltrimethoxysilane, vinylmethyldimethoxysilane, vinyldimethylmethoxysilane, vinyltriethoxysilane, vinylmethyldiethoxysilane, vinyldimethylethoxysilane, 3-(meth)acrylamidepropyltrimethoxysilane, and 3-(meth)acrylamidepropyltriethoxysilane; and the like.

A proportion of the other monomer unit(s) with respect to total monomer units in the PVA may be preferably 20 mol% or less, and may be more preferably 10 mol% or less. On the other hand, the proportion of the other monomer unit may be, for example, 0.1 mol% or more, and may be 1 mol% or more.

The PVA can be obtained by undergoing, for example, a polymerizing step, a saponifying step, and a washing step.

In the polymerizing step, a vinyl ester is polymerized to give a polyvinyl ester. In this polymerizing, the other monomer described above may be copolymerized with the vinyl ester. A procedure of polymerizing the vinyl ester is exemplified by a well-known procedure such as a bulk polymerization procedure, a solution polymerization procedure, a suspension polymerization procedure, an emulsion polymerization procedure, and the like. Of these procedures, the bulk polymerization procedure performed without a solvent and the solution polymerization procedure performed with a solvent such as an alcohol are preferred, and the solution polymerization procedure in which the polymerization is performed in the presence of a lower alcohol is more preferred. The lower alcohol is preferably an alcohol having 3 or fewer carbon atoms; more preferably methanol, ethanol, n-propanol, or isopropanol; and still more preferably methanol. In carrying out a polymerization reaction by the bulk polymerization procedure or the solution polymerization procedure, in terms of a reaction system, either of a batchwise system or a continuous system can be employed. It is to be noted that as described later, in order to decrease a content of a low molecular weight component (molecules having a molecular weight of 1,000 or less) in resultant water-soluble polymeric molecules (PVA), employing a continuous system is preferred.

Polymerization of the vinyl ester may be carried out in the presence of a chain transfer agent. Examples of the chain transfer agent include: aldehydes such as acetaldehyde and propionaldehyde; ketones such as acetone and methyl ethyl ketone; mercaptans such as 2-hydroxyethanethiol; phosphinic acid salts such as sodium phosphinate monohydrate; and the like. The amount of the chain transfer agent to be used may be predetermined in accordance with , for example, a chain transfer coefficient of the chain transfer agent to be used, a degree of polymerization of the PVA intended, and the like, and in general, 0.1 to 10 parts by mass with respect to 100 parts by mass of the vinyl ester are preferred.

In the saponifying step, the polyvinyl ester is saponified in a solution by using an alkali catalyst or an acid catalyst to give the PVA. For the saponification reaction of the polyvinyl ester, an alcoholysis or hydrolysis reaction using a well-known catalyst such as: a basic catalyst such as sodium hydroxide, potassium hydroxide, or sodium methoxide; or an acidic catalyst such as p-toluenesulfonic acid can be adopted. Examples of the solvent to be used in the saponification reaction include: alcohols such as methanol and ethanol; esters such as methyl acetate and ethyl acetate; ketones such as acetone and methyl ethyl ketone; aromatic hydrocarbons such as benzene and toluene; and the like. These can be used alone, or as a combination of two or more types thereof.

It is to be noted that in the PVA obtained by saponification using the alkali catalyst, randomness of the vinyl ester units and the vinyl alcohol unit is low, in other words, block characters of these monomer units are high. More specifically, the PVA saponified by the alkali catalyst tends to have a superior surface-active function due to having block chains of the vinyl ester unit and block chains of the vinyl alcohol unit both being long. Therefore, in a case in which the PVA obtained by saponification using the alkali catalyst is used, the surface tension can be sufficiently decreased even at a low concentration. For such a reason, a block character of remaining vinyl ester groups in the PVA is preferably 0.35 or more and less than 0.50. It is to be noted that the block character of the PVA obtained by saponification using the alkali catalyst is typically 0.30 or more and less than 0.50. On the other hand, the block character of the PVA obtained by saponification using the acid catalyst is typically 0.50 or more.

The block character as referred to herein means a value representing distribution of remaining ester groups and hydroxy groups generated by saponification of ester groups, and can fall within a numerical range of 0 to 2. "0" indicates that esters or hydroxy groups are distributed completely as blocks, and as the value increases, alternation increases: "1" indicates that ester groups and hydroxy groups are present completely at random, and "2" indicates that ester groups and hydroxy groups are present completely alternately. The block character can be determined by subjecting the PVA, in a mixed solvent of deuterated water and deuterated methanol, to $^{13}$C-NMR spectroscopy at a measurement temperature of 70 °C, and accumulating 18,000 scans, thereby obtaining three integrated values from which the block character is determined, i.e.: an integrated value of a peak of methylene carbon sandwiched between the remaining ester group and a hydroxy group; an integrated value of a peak of methylene carbon sandwiched between remaining ester groups; and an integrated value of a peak of methylene carbon sandwiched between hydroxy groups. The measurement method and a calculation method are described in "Poval" (Kobunshi Kanko Kai, published in 1984, pp. 246 to 249) and Macromolecules, 10, 532 (1977).

In the washing step, the PVA obtained after undergoing the saponifying step is washed. As a washing liquid for use in the washing, for example, a mix liquid of methyl acetate, methanol, and water, a mix liquid of methyl acetate and methanol, or the like, may be used. A washing procedure for the PVA is not particularly limited, and may be exemplified by: a procedure of charging the PVA and the washing liquid into a washing bath, and stirring the mixture; a procedure of spraying the washing liquid onto the PVA; and a procedure of bringing the PVA into contact with the washing liquid by counter-current. It is to be noted that as described later, in order to diminish the content of low molecular weight components (molecules having a molecular weight of 1,000 or less), carrying out sufficient washing, specifically, carrying out the washing a plurality of times, prolonging a time period of the washing, and/or the like, are/is preferred. In addition, a composition of the washing liquid used may also affect the content of the low molecular weight component.

In producing the PVA, other step(s) such as a drying step may be provided after the washing step.

An average degree of polymerization of the water-soluble polymeric molecules is not particularly limited, and is preferably 200 or more, more preferably 400 or more, still more preferably 600 or more, and particularly preferably 800 or more. The average degree of polymerization is preferably 5,000 or less, more preferably 4,000 or less, and still more preferably 3,000 or less. When the average degree of polymerization falls within the above range, the surface tension can be effectively lowered while inhibiting an increase in viscosity of the culture fluid.

In the case in which the water-soluble polymeric molecules is the PVA, the average degree of polymerization as referred to herein is a viscosity-average degree of polymerization determined in accordance with JIS K6726: 1994. More specifically, the average degree of polymerization can be determined by resaponifying the PVA to give the degree of saponification of 99.5 mol% or more, followed by purification, and measuring a limiting viscosity [η] (unit: liter/g) in water at 30 °C and calculating therefrom by the following equation.

$$\text{viscosity-average degree of polymerization} = ([\eta] \times 10^4/8.29)^{(1/0.62)}$$

Also, the average degree of polymerization of the water-soluble polymeric molecules other than the PVA can be determined by a conventional method.

The content of the molecules having a molecular weight of 1,000 or less in the water-soluble polymeric molecules may be, for example, 1% by mass or less, and is preferably 0.5% by mass or less, more preferably 0.3% by mass or less, and still more preferably 0.1% by mass or less. The water-soluble polymeric molecules having a molecular weight of 1,000 or less are likely to be absorbed into plant bodies, and in this case, some influences on plant growth, quality, and the like are conceivable. Thus, setting the content of molecules having a molecular weight of 1,000 or less in the water-soluble polymeric molecules to be equal to or less than the upper limit enables reducing the risk of absorption of the water-soluble polymeric molecules into plant bodies. The content of the molecules having a molecular weight of 1,000 or less in the water-soluble polymeric molecules may be 0.0001% by mass or more, or may be 0.001% by mass or more.

The content of molecules having a molecular weight of 1,000 or less in the water-soluble polymeric molecules can be reduced by: (1) polymerizing by a continuous system; (2) using a chain transfer agent in polymerizing; (3) sufficiently washing the water-soluble polymeric molecules to eliminate low molecular weight components; and/or the like. It is also permissible to select two or more of these procedures. In a case in which such a procedure is not adopted, even with the water-soluble polymeric molecules having, for example, the same average degree of polymerization, the content of molecules having a molecular weight of 1,000 or less may be different. The content of the molecules having a molecular weight of 1,000 or less in the water-soluble polymeric molecules is defined as a content of molecules having a weight average molecular weight of 1,000 or less, as determined by GPC (gel permeation chromatography). Specifically, the content can be determined by a method described in EXAMPLES.

The lower limit of a concentration of the water-soluble polymeric molecules contained in the culture fluid of the present invention is preferably 0.001% by mass, more preferably 0.005% by mass, still more preferably 0.01% by mass, and even more preferably 0.02% by mass. When the concentration of the water-soluble polymeric molecules is equal to or more than the lower limit, the surface tension of the culture fluid can be more sufficiently lowered. On the other hand, the upper limit of the concentration of the water-soluble polymeric molecules is preferably 1% by mass, more preferably 0.5% by mass, still more preferably 0.3% by mass, and even more preferably 0.1% by mass. When the concentration of the water-soluble polymeric molecules is equal to or less than the upper limit, the kinematic viscosity of the culture fluid can be more sufficiently controlled.

Surface Tension

The upper limit of the surface tension at 20 °C of the culture fluid of the present invention is 70 mN/m, preferably 65 mN/m, more preferably 60 mN/m, and still more preferably 56 mN/m. When the surface tension of the culture fluid is equal to or less than the upper limit, the amount of water absorption by plants can be increased. On the other hand, the lower limit of the surface tension is 45 mN/m, and preferably 48 mN/m. In order to decrease the surface tension, increasing the concentration of the water-soluble polymeric molecules is necessary; however, in a case in which the concentration of the water-soluble polymeric molecules is too high, the kinematic viscosity of the culture fluid excessively increases, whereby the amount of water absorption by plants may be lowered. Thus, by setting the surface tension of the culture fluid to be equal to or more than the lower limit, the kinematic viscosity of the culture fluid is prevented from being excessively high, whereby the amount of water absorption by plants increases. The surface tension of the culture fluid at 20 °C is defined as a value measured by a Wilhelmy method (plate method) at 20 °C, after bringing the temperature of the culture fluid to a constant of 20 °C in a temperature-controlled water bath at 20 °C.

The surface tension of the culture fluid depends on a type, physical properties, a concentration, and the like of each component, particularly water-soluble polymeric molecules, to be contained. In the case in which the water-soluble polymeric molecule is the PVA, the degree of saponification, the degree of polymerization, the state of distribution of the vinyl ester unit and the vinyl alcohol unit (block character), and the like may have influences.

In the case in which the water-soluble polymeric molecules are PVA, it is preferred that:

the degree of saponification of the PVA is 75 mol% or more and 85 mol% or less, and the surface tension of the culture fluid at 20 °C is 45 mN/m or more and 55 mN/m or less;
the degree of saponification of the PVA is 85 mol% or more and 90 mol% or less, and the surface tension of the culture fluid at 20 °C is 45 mN/m or more and 58 mN/m or less; or
the degree of saponification of the PVA is 90 mol% or more and 99 mol% or less, and the surface tension of the culture fluid at 20 °C is 45 mN/m or more and 70 mN/m or less. In the case of such a culture fluid, water solubility, kinematic viscosity, surface tension, and the like of the PVA are particularly optimized.

Kinematic Viscosity

The upper limit of the kinematic viscosity at 30 °C of the culture fluid of the present invention is 2.00 $mm^2/s$, preferably 1.9 $mm^2/s$, more preferably 1.8 $mm^2/s$, still more preferably 1.6 $mm^2/s$, even more preferably 1.2 $mm^2/s$, and particularly preferably 1.0 $mm^2/s$. When the kinematic viscosity of the culture fluid is equal to or less than the upper limit, the amount of water absorption by plants can be increased. On the other hand, the lower limit of the kinematic viscosity is 0.8 $mm^2/s$, may be 0.80 $mm^2/s$, or may be 0.81 $mm^2/s$. The kinematic viscosity of the culture fluid at 30 °C is defined as a value measured with an Ubbelohde viscometer at 30 °C according to a method described in JIS K2283: 2000, after bringing the temperature of the culture fluid to a constant of 30 °C in a temperature-controlled water bath at 30 °C.

The kinematic viscosity of the culture fluid depends on a type, physical properties, a concentration, and the like of each component, particularly water-soluble polymeric molecules, to be contained. Typically, the kinematic viscosity increases as the degree of polymerization of the water-soluble polymeric molecules increases and the concentration of the water-soluble polymeric molecules is elevated.

Other Component(s)

The culture fluid of the present invention is an aqueous solution containing the water-soluble polymeric molecules, and may further contain component(s) other than the water-soluble polymeric molecules and water.

The other component(s) is/are typically exemplified by a fertilizer. The fertilizer may be appropriately selected in accordance with the type of the plant to be cultivated, and typically, a well-known fertilizer can be used. Examples of the fertilizer include $Ca(NO_3)_2 \cdot 4H_2O$, $KNO_3$, $NH_4H_2PO_4$, $MgSO_4 \cdot 7H_2O$, $NH_4NO_3$, Fe-EDTA, $H_3BO_3$, $MnCl_2 \cdot 4H_2O$, and the like. A concentration of the fertilizer in the culture fluid is not particularly limited, and may be a concentration that is similar to the concentration in conventionally well-known culture fluids for hydroponics. In addition, the culture fluid of the present invention may contain various types of components being contained in conventionally well-known culture fluids for hydroponics.

Method of Use, etc.

The culture fluid of the present invention can be used as a culture fluid for various types of hydroponics similar to conventionally well-known culture fluids. The plant which may be cultivated using the culture fluid is not particularly limited, and examples of the plant include: vegetables such as tomato, cucumber, melon, strawberry, honewort, cibol, Japanese basil, lettuce, and radish; flowers such as tulip, rose, gerbera, and carnation; and the like. Moreover, the culture fluid may be employed also for cut flowers of lily, bouvardia, rose, carnation, and the like, as well as green roof shrubs such as *Raphiolepis umbellata*, camellia, and *Camellia sasanqua*.

The culture fluid of the present invention may be employed for cultivation by either of a deep flow technique and a circulating system. In the deep flow technique, aeration is carried out into a medium filled with the culture fluid. In the circulating system, oxygen is fed in a step of circulating water. Moreover, the culture fluid of the present invention may be used in a state of being bubbled, i.e., including bubbles, or may be used in a state of not substantially including bubbles. The culture fluid not substantially including bubbles as referred to herein means that a proportion accounted for by bubbles in the culture fluid is less than 10% on volume basis.

Additive for Culture Fluid

The additive for a culture fluid of the present invention is an additive for a culture fluid for hydroponics consisting of: water-soluble polymeric molecules having a content of molecules having a molecular weight of 1,000 or less being 0.5% by mass or less; and optionally, a fertilizer.

More specifically, the additive for a culture fluid is in any one of:

(1) a form consisting of only the water-soluble polymeric molecules having a content of molecules having a molecular weight of 1,000 or less being 0.5% by mass or less; and

(2) a form consisting of: the water-soluble polymeric molecules having a content of molecules having a molecular weight of 1,000 or less being 0.5% by mass or less; and a fertilizer.

Specific modes and suitable modes of: the water-soluble polymeric molecules being a component of the additive for a culture fluid; and the fertilizer being an optional component thereof are similar to the specific modes and suitable modes of the water-soluble polymeric molecules and the fertilizer contained in the culture fluid of the present invention described above.

In the case in which the additive for a culture fluid consists of the water-soluble polymeric molecules and the fertilizer, a mixing ratio of the same (water-soluble polymeric molecules: fertilizer) is not particularly limited, and for example, the mass ratio preferably falls within the range of from 1:99 to 99.9:0.1, and more preferably falls within the range of from 10:90 to 90:10.

The additive for a culture fluid may be a solid matter in a particulate form, powdery form, or the like. By dissolving the additive for a culture fluid in water, a culture fluid for hydroponics can be prepared. Since the additive for a culture fluid has a low content of the molecules having a molecular weight of 1,000 or less in the water-soluble polymeric molecules, risk of absorption of the water-soluble polymeric molecules into plant bodies can be low.

Cultivation Method

The cultivation method of the present invention includes a step of performing hydroponics by using: the culture fluid of the present invention; or a culture fluid containing the additive for a culture fluid of the present invention. The cultivation method may also include a step of preparing the culture fluid. The preparing of the culture fluid can be carried out by dissolving the water-soluble polymeric molecules or the additive for a culture fluid, and other optional component(s) in water.

The cultivation method of the present invention can be carried out by a method similar to conventionally well-known hydroponics (hydroponic culture), except that the culture fluid containing the culture fluid of the present invention or the additive for a culture fluid of the present invention is used. The plant to be cultivated by the cultivation method may be exemplified by plants similar to those exemplified as the plant to be cultivated by using the culture fluid of the present invention. For the hydroponics, either the deep flow technique or the circulating system may be adopted. Furthermore, in performing the hydroponics, the culture fluid may be in a state of including bubbles, or may be used in a state of substantially not including bubbles.

Since the culture fluid accompanied by a large amount of water absorption by plants is used in the cultivation method of the present invention, the plant is capable of effectively absorbing the fertilizer, thereby consequently leading to an expectation of enhancement of cultivation efficiency, and the like.

[EXAMPLES]

The present invention is more specifically described by way of the following Examples, but the present invention is not in any way limited by these Examples. It is to be noted that each evaluation method employed in the following Examples and Comparative Examples is shown below.

Degree of Saponification of PVA

The degree of saponification of the PVA was determined by a method described in JIS K6726: 1994.

Viscosity-Average Degree of Polymerization of PVA

The viscosity-average degree of polymerization of the PVA was determined in accordance with JIS K6726:

1994. Specifically, resaponification was conducted until the degree of saponification became 99.5 mol% or more, and the viscosity-average degree of polymerization was determined on the resultant PVA by the following equation, using a limiting viscosity[η] (liter/g) measured in water at 30 °C.

$$\text{viscosity-average degree of polymerization} = ([\eta] \times 10^4/8.29)^{(1/0.62)}$$

Content of Molecules Having Molecular Weight of 1,000 or Less

The content of the molecules having a molecular weight of 1,000 or less in the water-soluble polymeric molecules (PVA or PEG) was determined by GPC (gel permeation chromatography). Both an apparatus and conditions for the GPC measurement are as in the following.

apparatus: GPC apparatus "HLC-8320GPC" manufactured by Tosoh Corporation
column: "GMHHR-H (S)" manufactured by Tosoh Corporation
mobile phase: HFIP + 20 mM $CF_3COONa$
flow rate: 0.2 mL/min
sample concentration: 0.1% by mass
amount of sample injected: 10 μL
detector: differential refractometer
column temperature: 40 °C
authentic sample: polymethyl methacrylate

Surface Tension of Culture Fluid

After making the temperature of the culture fluid constant to be 20 °C in a temperature-controlled water bath at 20 °C, the surface tension of the culture fluid was measured by the Wilhelmy method (plate method) at 20 °C with "Surface Tensiometer" (manufactured by Kyowa Interface Science Co., LTD.).

Kinematic Viscosity of Culture Fluid

The kinematic viscosity of the culture fluid at 30 °C was measured with an Ubbelohde viscometer (manufactured by Sibata Scientific Technology Ltd.) at 30 °C according to the method described in JIS K2283: 2000, after making the temperature of the culture fluid constant to be 30 °C in a temperature-controlled water bath at 30 °C.

Amount of Water Absorption by Plant

In a vessel filled with water, a slant cut was performed at a site 2 to 3 cm away from the tip of a cut edge of a cut chrysanthemum flower, whereby a cutting treatment in water was executed. The culture fluid was charged into a measuring cylinder, and the chrysanthemum subjected to the cutting treatment in water was placed therein. Thereto was added an appropriate amount of edible oil on the liquid surface in order to prevent evaporation of the culture fluid from the measuring cylinder. At 25 °C, the mass of water absorption was measured one hour later, from immediately after placing the chrysanthemum in the measuring cylinder, and the mass was converted to be per 100 g of the chrysanthemum. The amount of water absorption was classified as follows, with respect to the amount of water absorption in the culture fluid (Comparative Example 1) without the water-soluble polymeric molecules added. In the case of A or B, the amount of water absorption by plants was assessed to be sufficiently large.

A: with respect to the amount of water absorption of Comparative Example 1, the amount of water absorption being increased by 10% or more
B: with respect to the amount of water absorption of Comparative Example 1, the amount of water absorption being increased by 1% or more and less than 10%
C: with respect to the amount of water absorption of Comparative Example 1, the amount of water absorption being increased by less than 1%

Risk of Absorption into Plant Bodies

On the basis of the determined content of molecules having a molecular weight of 1,000 or less in the water-soluble polymeric molecules, risk of absorption of the water-soluble polymeric molecules into plant bodies was classified as follows. There is a possibility of the molecules having a small molecular weight being absorbed from the plant root and having a negative influence on the growth of the plant body; however, by sufficiently lowering the content of the molecules having a molecular weight of 1,000 or less, use without adversely affecting the growth of the plant body is enabled. More specifically, in the case of A, the risk of absorption of the water-soluble polymeric molecules into plant bodies was assessed to be low.

A: the content of molecules having a molecular weight of 1,000 or less in the water-soluble polymeric molecules being 0.5% by mass or less

B: the content of molecules having a molecular weight of 1,000 or less in the water-soluble polymeric molecules exceeding 0.5% by mass

Synthesis Example 1: Production of PVA1

Into a separable flask equipped with a stirrer, a nitrogen-feeding port, and an initiator addition port were charged 1,800 g of vinyl acetate and 400 g of methanol, and the temperature was elevated to 60 °C and thereafter replacement with nitrogen in the system was carried out for 30 min by bubbling nitrogen. After the internal temperature of the flask was adjusted to 60 °C, 0.25 g of AIBN (azobisisobutyronitrile) was added thereto to start polymerization. When a conversion (rate of polymerization) became 30% after 3.5 hrs lapsed from the start of the polymerization, 1,000 g of methanol was added and cooling was performed to stop the polymerization. Thereafter, an unreacted vinyl acetate monomer was eliminated to give a PVAc (polyvinyl acetate) solution in methanol. Methanol was added to the PVAc solution thus obtained such that the concentration was adjusted to be 25% by mass, and to this PVAc solution in methanol was added a 10% by mass NaOH solution in methanol such that a molar ratio [alkali molar ratio] of NaOH to the vinyl acetate unit in the PVAc became 0.005, whereby saponification was conducted at 40 °C. After the alkali was added, gelated matter was ground with a grinder and a saponification reaction was allowed for one hour in total. Thereafter, remaining alkali was neutralized by adding methyl acetate. After completion of the neutralization was ascertained with a phenolphthalein indicator, PVA as a white solid obtained by filtration was washed by adding 1,000 g of methanol and leaving to stand at room temperature for 3 hrs. After the washing operation was repeated three times, the PVA obtained by deliquoring through centrifugation was dried by leaving to stand in a dryer at 70 °C for 2 days to give PVA (PVA1). With respect to PVA1 thus obtained, the degree of saponification was 80 mol%, the degree of polymerization was 2,400, the content of molecules having a molecular weight of 1,000 or less was 0.01% by mass, and the block character was 0.457.

Synthesis Examples 2 to 5: Production of PVA2 to PVA5

PVA2 to PVA5 were obtained similarly to Synthesis Example 1 except that conditions shown in Table 1 were employed.

Synthesis Example 6: Production of PVA6

Into a separable flask equipped with a stirrer, a nitrogen-feeding port, and an initiator addition port were charged 1,300 g of vinyl acetate and 500 g of methanol, and the temperature was elevated to 60 °C and thereafter replacement with nitrogen in the system was carried out for 30 min by bubbling nitrogen. After the internal temperature of the flask was adjusted to 60 °C, 0.40 g of AIBN was added thereto to start polymerization. When a conversion became 40% after 3.6 hrs lapsed from the start of the polymerization, 1,000 g of methanol was added and cooling was performed to stop the polymerization. Thereafter, an unreacted vinyl acetate monomer was eliminated to give a PVAc solution in methanol. Methanol was added to the PVAc solution thus obtained such that the concentration was adjusted to be 25% by mass, and to this PVAc solution in methanol was added a 10% by mass NaOH solution in methanol such that a molar ratio [alkali molar ratio] of NaOH to the vinyl acetate unit in the PVAc became 0.008, whereby saponification was conducted at 40 °C. After the alkali was added, gelated matter was ground with a grinder and a saponification reaction was allowed for one hour in total. Thereafter, remaining alkali was neutralized by adding methyl acetate. After completion of the neutralization was ascertained with a phenolphthalein indicator, 1,000 g of methanol was poured from above onto PVA as a white solid obtained by filtration. The PVA obtained by deliquoring through centrifugation was dried by leaving to stand in a dryer at 70 °C for 2 days to give PVA (PVA6). With respect to PVA6 thus obtained, the degree of saponification was 88 mol%, the degree of polymerization was 1,700, and the content of molecules having a molecular weight of 1,000 or less was 0.6% by mass.

Synthesis Example 7: Production of PVA7

Into a separable flask equipped with a stirrer, a nitrogen-feeding port, and an initiator addition port were charged 1,300 g of vinyl acetate and 500 g of methanol, and the temperature was elevated to 60 °C and thereafter replacement with nitrogen in the system was carried out for 30 min by bubbling nitrogen. After the internal temperature of the flask was adjusted to 60 °C, 0.40 g of AIBN was added thereto to start polymerization. When a conversion became 40% after 3.6 hrs lapsed from the start of the polymerization, 1,000 g of methanol was added and cooling was performed to stop the polymerization. Thereafter, an unreacted vinyl acetate monomer and methanol were eliminated. Into a simplified glass reaction apparatus having an internal volume of 1 liter and being equipped with a thermometer, a stirrer, a heating apparatus, a sample-feeding port, a sample-drawing port, and a pressure gauge were charged 60 g of the PVAc obtained and 180 mL of 1,4-dioxane, and replacement with nitrogen gas in the system was sufficiently carried out. Thereafter, temperature elevation was conducted until the internal temperature became 80 °C, and the PVAc was dissolved under stirring. After the PVAc was dissolved, in a nitrogen atmosphere, a 20% by mass aqueous p-toluenesulfonate monohydrate solution was added in a lump from the sample-feeding port such that a molar ratio [acid molar ratio] of p-toluenesulfonate·monohydrate to the vinyl acetate unit in the PVAc became 0.08 and temperature elevation was conducted in a state of being left to stand, until the internal temperature became 100 °C. After the internal temperature being constant was ascertained, stirring at a stirring rate of 500 rpm was started to perform the saponification reaction. After precipitation of the PVA from the reaction system was found, the operation was continued for 50 min to allow for the reaction. Thereafter, the stirring was stopped, and after the reaction mix liquid was cooled, the precipitated PVA was separated and collected from the reaction liquid. Thus resulting PVA was cut into small pieces, followed by washing with 1,4-dioxane and drying under reduced pressure in a warm water bath at 40 °C. With respect to PVA7 thus obtained, the degree of saponification was 88 mol%, the degree of polymerization was 1,700, the content of molecules having a molecular weight of 1,000 or less was 0.02% by mass, and the block character was 0.602.

Synthesis Example 8: Production of PVA8

PVA8 was obtained similarly to Synthesis Example 7 except that conditions shown in Table 1 were employed. With respect to PVA8 thus obtained, the degree of saponification was 80 mol%, the degree of polymerization was 2,400, the content of molecules having a molecular weight of 1,000 or less was 0.01% by mass, and the block character was 0.579.

Synthesis Examples 9 and 10: Production of PVA9 and PVA10

PVA9 and PVA10 were obtained similarly to Synthesis Example 6 except that conditions shown in Table 1 were employed.
As PEG1, commercially available polyethylene glycol having a number-average molecular weight of 12,000, and in which the content of molecules having a molecular weight of 1,000 or less is 0.03% by mass was provided.
As PEG2, commercially available polyethylene glycol having a number-average molecular weight of 7,500, and in which the content of molecules having a molecular weight of 1,000 or less is 0.48% by mass was provided.

Examples 1 to 12, Comparative Examples 1 to 3: Preparation of Culture Fluid

Fine powder HYPONeX (registered trademark; manufactured by HYPONeX JAPAN CORP., LTD.), being a fertilizer liquid, was diluted 1,000 times, and each of culture fluids of Examples 1 to 12 and Comparative Examples 1 to 3 was prepared such that the water-soluble polymeric molecules of the type and at the concentration shown in Table 2 were contained. It is to be noted that Comparative Example 1 is a culture fluid obtained by 1,000 times dilution of fine powder HYPONeX (registered trademark), without containing the water-soluble polymeric molecules.

Evaluations

On each culture fluid prepared, the amount of water absorption by plants was determined according to the method described above. Furthermore, the risk of absorption into plant bodies was evaluated on respective water-soluble polymeric molecules, according to the criteria described above. These results are shown in Table 2.

Table 1

| | | Polymerization condition | | | | | | | Saponification condition | | | |
|---|---|---|---|---|---|---|---|---|---|---|---|---|
| | | Vinyl acetate (g) | Methanol (g) | Initiator | | Temperature (°C) | Time (hr) | Conversion (%) | PVAc concentration (mass%) | Alkali molar ratio | Acid molar ratio | Temperature (°C) |
| | | | | type | charge (g) | | | | | | | |
| Synthesis Example 1 | PVA1 | 1,800 | 400 | AIBN | 0.25 | 60 | 3.5 | 30 | 25 | 0.005 | - | 40 |
| Synthesis Example 2 | PVA2 | 825 | 675 | AIBN | 0.30 | 60 | 3.8 | 40 | 25 | 0.0,075 | - | 40 |
| Synthesis Example 3 | PVA3 | 1,300 | 500 | AIBN | 0.40 | 60 | 3.6 | 40 | 25 | 0.008 | - | 40 |
| Synthesis Example 4 | PVA4 | 1,300 | 500 | AIBN | 0.40 | 60 | 3.6 | 40 | 25 | 0.03 | - | 40 |
| Synthesis Example 5 | PVA5 | 630 | 1,170 | AIBN | 0.50 | 60 | 3.2 | 40 | 40 | 0.006 | - | 40 |
| Synthesis Example 6 | PVA6 | 1,300 | 500 | AIBN | 0.40 | 60 | 3.6 | 40 | 25 | 0.008 | - | 40 |
| Synthesis Example 7 | PVA7 | 1,300 | 500 | AIBN | 0.40 | 60 | 3.6 | 40 | - | - | 0.08 | 100 |
| Synthesis Example 8 | PVA8 | 1,800 | 400 | AIBN | 0.25 | 60 | 3.5 | 30 | - | - | 0.05 | 100 |
| Synthesis Example 9 | PVA9 | 1,300 | 500 | AIBN | 0.40 | 60 | 3.6 | 40 | 25 | 0.03 | - | 40 |
| Synthesis Example 10 | PVA10 | 1,300 | 500 | AIBN | 0.40 | 60 | 3.6 | 40 | 25 | 0.03 | - | 40 |

Table 2

| | | Water-soluble polymeric molecules | | | | Culture fluid | | Evaluations | |
|---|---|---|---|---|---|---|---|---|---|
| | Type | Degree of saponification (mol%) | Degree of polymerization | Content of molecules having molecular weight of 1,000 or less (% by mass) | Concentration (mass%) | Surface tension (mN/m) | Kinematic viscosity (mm$^2$/s) | Amount of water absorption by plant | Risk of absorption into plant bodies |
| Example 1 | PVA1 | 80 | 2,400 | 0.01 | 0.05 | 50.0 | 0.835 | A | A |
| Example 2 | PVA1 | 80 | 2,400 | 0.01 | 0.01 | 53.4 | 0.816 | A | A |
| Example 3 | PVA1 | 80 | 2,400 | 0.01 | 0.50 | 47.0 | 1.313 | B | A |
| Example 4 | PVA2 | 88 | 1,000 | 0.13 | 0.05 | 52.6 | 0.814 | A | A |
| Example 5 | PVA3 | 88 | 1,700 | 0.03 | 0.05 | 54.0 | 0.821 | A | A |
| Example 6 | PVA4 | 98 | 1,700 | 0.02 | 0.05 | 68.7 | 0.831 | B | A |
| Example 7 | PVA5 | 88 | 500 | 0.24 | 0.05 | 50.1 | 0.809 | A | A |
| Example 8 | PEG1 | - | - | 0.03 | 0.05 | 66.4 | 0.805 | B | A |
| Example 9 | PVA6 | 88 | 1,700 | 0.60 | 0.05 | 53.5 | 0.820 | A | B |
| Example 10 | PVA7 | 88 | 1,700 | 0.02 | 0.05 | 59.6 | 0.816 | B | A |
| Example 11 | PEG2 | - | - | 0.48 | 0.05 | 62.8 | 0.804 | B | A |
| Example 12 | PVA8 | 80 | 2,400 | 0.01 | 0.01 | 58.7 | 0.814 | B | A |
| | | | | | | | | | |
| Comparative Example 1 | - | - | - | - | - | 73.9 | 0.804 | - | A |
| Comparative Example 2 | PVA9 | 98 | 1,700 | 0.60 | 1.00 | 63.9 | 2.020 | C | B |
| Comparative Example 3 | PVA10 | 98 | 1,700 | 0.60 | 0.01 | 70.5 | 0.814 | C | B |

EP 4 268 579 A1

As shown in Table 2, each of the culture fluids of Examples 1 to 12 exhibited a large amount of water absorption by plants, and as a result, fertilizer components in the culture fluids are considered to be sufficiently absorbed by plants. To the contrary, the culture fluid of Comparative Example 2 had a high kinematic viscosity, and exhibited a small amount of water absorption by plants. The culture fluid of Comparative Example 3 had a sufficiently low surface tension, and exhibited a small amount of water absorption by plants.

Moreover, when comparing amongst the Examples, Example 3, containing the water-soluble polymeric molecules at a high concentration, had a sufficiently low surface tension but had a comparatively high kinematic viscosity, and as a result, the amount of water absorption by plants was somewhat small. Furthermore, Examples 6, 8, 10, and 12, each having a comparatively high surface tension, also resulted in somewhat small amounts of water absorption by plants. With respect to Example 9, since the content of molecules having a molecular weight of 1,000 or less in the water-soluble polymeric molecules is high, the risk of absorption of the water-soluble polymeric molecules into the plant bodies is somewhat concerning.

It is to be noted that when, for example, Example 2 and Example 12 are compared, although both PVAs had: a degree of saponification of 80 mol%; a degree of polymerization of 2,400; and a content of the molecules having a molecular weight of 1,000 or less being 0.01% by mass, the molecules being contained at the same concentration of 0.01% by mass, the surface tension of Example 2 was lower and the amount of water absorption by plants was larger. In contrast to PVA1, which was produced by alkali saponification and had the block character of 0.457, PVA8 was produced by acid saponification, and had the block character of 0.579, thereby leading to a consideration that differences in such production conditions and block characters of the PVAs are reflected in the difference in surface tension.

[INDUSTRIAL APPLICABILITY]

The culture fluid of the present invention can be suitably used for hydroponics of various types of plants.

**Claims**

1.  A culture fluid for hydroponics comprising water-soluble polymeric molecules, wherein

    a surface tension at 20 °C of the culture fluid is 45 mN/m or more and 70 mN/m or less, and
    a kinematic viscosity at 30 °C of the culture fluid is 0.8 mm$^2$/s or more and 2.00 mm$^2$/s or less.

2.  The culture fluid according to claim 1, wherein a content of molecules having a molecular weight of 1,000 or less in the water-soluble polymeric molecules is 0.5% by mass or less.

3.  An additive for a culture fluid for hydroponics, the additive consisting of:

    water-soluble polymeric molecules having a content of molecules having a molecular weight of 1,000 or less being 0.5% by mass or less; and
    optionally, a fertilizer.

4.  A cultivation method comprising a step of performing hydroponics by using: the culture fluid according to claim 1 or 2; or a culture fluid comprising the additive for a culture fluid according to claim 3.

## INTERNATIONAL SEARCH REPORT

| International application No. |
|---|
| **PCT/JP2021/047746** |

**A.  CLASSIFICATION OF SUBJECT MATTER**

*A01G 31/00*(2018.01)i
FI:    A01G31/00 601A

According to International Patent Classification (IPC) or to both national classification and IPC

**B.    FIELDS SEARCHED**

Minimum documentation searched (classification system followed by classification symbols)

A01G31/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.     DOCUMENTS CONSIDERED TO BE RELEVANT**

| Category* | Citation of document, with indication, where appropriate, of the relevant passages | Relevant to claim No. |
|---|---|---|
| X | JP 7-213182 A (KURARAY CO LTD) 15 August 1995 (1995-08-15) claims, paragraphs [0008]-[0010] | 1, 4 |
| Y | claims, paragraphs [0008]-[0010] | 2, 3 |
| X | JP 3-58722 A (OKA, Hiroshi) 13 March 1991 (1991-03-13) claims, p. 2, upper right column to p. 2, lower right column | 1, 4 |
| Y | claims, p. 2, upper right column to p. 2, lower right column | 2, 3 |
| A | 府川 幸資　外２名, ポリマー水溶液の表面張力に関する研究, 高分子化学, (1961) vol. 18, no. 198, [retrieval date 17 January 2022], 596-604, https://www.jstage.jst.go.jp/article/koron1944/18/198/18_198_596/_pdf/-char/ja pp. 596-604, (FUKAWA, Koji et al. On the Surface Tension of Aqueous Solutions of High Polymers. Kobunshi Kagaku.) | 1-4 |

☑ Further documents are listed in the continuation of Box C.       ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **17 January 2022** | **01 February 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT

| International application No. |
|---|
| **PCT/JP2021/047746** |

**C.      DOCUMENTS CONSIDERED TO BE RELEVANT**

| Category* | Citation of document, with indication, where appropriate, of the relevant passages | Relevant to claim No. |
|---|---|---|
| A | 中林 和重　外3名, 泡沫耕, 気泡水耕, サンゴ砂耕, および水耕栽培システムによるメロンの成育, 植物工場学会誌, [retrieval date 17 January 2022], vol. 11, no. 1, pp. 32-37, https://www.jstage.jst.go.jp/article/jshita1991/11/1/11_1_32/_pdf/-char/ja<br>　　pp. 32-37, (NAKABAYASHI, Kazushige et al. Growth of Melon Plants by Foam Cultivation, Bubbling Water Cultivation, Coral Sand Cultivation, and Conventional Hydroponics Systems. Shokubutsu Kojo Gakkaishi.) | 1-4 |

Form PCT/ISA/210 (second sheet) (January 2015)

INTERNATIONAL SEARCH REPORT
Information on patent family members

International application No.

**PCT/JP2021/047746**

| Patent document cited in search report | | | Publication date (day/month/year) | Patent family member(s) | | | Publication date (day/month/year) |
|---|---|---|---|---|---|---|---|
| JP | 7-213182 | A | 15 August 1995 | NL | 9402079 | A | |
| | | | | p. 8, table 1, p. 11 | | | |
| JP | 3-58722 | A | 13 March 1991 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015149968 A

- JP 2017063632 A

**Non-patent literature cited in the description**

- **KOBUNSHI KANKO KAI.** *Poval,* 1984, 246-249

- *Macromolecules,* 1977, vol. 10, 532